# EUROPEAN PATENT APPLICATION

(11) **EP 1 605 343 A2**
(43) Date of publication of application: **14.12.2005**
(21) Application number: 05253396.5
(22) Date of filing: 02.06.2005
(51) Int. Cl.: G06F 3/033

(54) **Information input device**

(30) Priority: 07.06.2004 JP 2004169017
(71) Applicant: K.G. MARK CO., LTD., Chiyoda-ku Tokyo (JP)
(72) Inventor: Sugita, Go, Tokyo (JP)
(74) Representative: Vigars, Christopher Ian

(57) **Abstract**

Provided is an information input device including: a portable receiver casing (1) including a receiving portion for receiving an information signal and a reception processing portion for transmitting received data to an electronic apparatus; and a mouse body that serves as an information input member (5) including a transmitting portion for transmitting the information signal to the receiving portion, the mouse body being detachably housed in the receiver casing, in which the mouse body is taken out and separated from the receiver casing before information is inputted from the mouse body via the receiving portion of the receiver to an electronic apparatus. In the information input device, a separable mouse is housed in a portable small-sized receiver.

## Description

### BACKGROUND OF THE INVENTION

### 1. Field of the Invention

The present invention relates to an information input device for transmitting an information signal to a personal computer or the like, and more particularly to an information input device for inputting information to an electronic apparatus from an information input member such as a mouse which includes a transmitting portion via a receiver device which includes a receiving portion.

### 2. Description of the Related Art

Examples of an input device commonly used for inputting information to an electronic apparatus such as a computer including a personal computer, a cellular phone, or portable audiovisual equipment include information input devices such as a mouse and a content player that are each connected via a cable to such an electronic apparatus. There has been a recent trend to use a cordless input device with no cables as the input device.

In the case of a notebook computer, a mouse or the like as an input terminal is difficult to carry, and a mouse and a cord for the mouse are carried in a pocket. In order to alleviate the inconvenience, it is proposed to house an input terminal such as a mouse in a computer and to carry the computer and the input terminal as a single piece (UP 3030384 B and JP 05-53688 A). It is also proposed to send an information signal by wireless transmission from a mouse as an input terminal without a cable connected thereto (JP2003-296020 A).

In this way, a wide range of information input devices such as mice have been developed.

What are proposed in utility model 3030384 B and JP 05-53688 A have a problem in portability, since the size of a computer itself is large in order to save space for the housing. A wireless product as proposed in JP 2003-296020 A can not transmit a sufficiently strong signal. Further, a small-sized mouse can transmit only a weak signal due to the ability of the transmitter, and thus, a transmitted signal is difficult to accurately be inputted to a computer. Another wireless product as proposed in JP 2002-157085 A is charge device in order to a mouse. This is not a house.

Since a mouse or the like as an information input device is designed to fit in the palm of a hand for ease of operation and is designed in a special shape for ease of finger operation, it does not fit within a pocket when held therein, and the problem becomes more serious when it is carried around.

### SUMMARY OF THE INVENTION

The present invention has been made in view of the above, and therefore an object of the present invention is to provide an information input device capable of fitting within a pocket or a bag when held therein.

Another object of the present invention is to provide an information input device capable of being carried around with a mouse housed in a small-sized portable receiver, which allows reliable input of information to a computer.

The above-mentioned objects of the present invention can be attained by adopting the following structures. According to an aspect of the present invention, there is provided an information input device including: a portable receiver casing including a receiving portion for receiving an information signal and a reception processing portion for transmitting received data to an electronic apparatus; and an information input portion casing including a transmitting portion for transmitting the information signal to the receiving portion, the information input portion casing being detachably housed in the receiver casing.

According to another aspect of the present invention, there is provided an information input device including: a portable receiver casing including a receiving portion for receiving an information signal and a reception processing portion for transmitting received data to an electronic apparatus; and a mouse body that serves as an information input member including a transmitting portion for transmitting the information signal to the receiving portion, the mouse body being detachably housed in the receiver casing, in which the mouse body is taken out and separated from the receiver casing before information is inputted from the mouse body via the receiving portion of the receiver to the electronic apparatus.

According to still another aspect of the present invention, there is provided an information input device which includes: a portable receiver casing, the receiver casing including a receiving portion for receiving an information signal and a reception processing portion for transmitting received data to an electronic apparatus; and an information input portion casing including a transmitting portion for transmitting the information signal to the receiving portion, the information input portion casing being detachably housed in the receiver casing, in which the information input portion casing is turned off automatically when housed in the receiver casing and the information input portion casing is turned on automatically when taken out from the receiver casing. Further, there is provided an information input device which detachably houses a mouse that serves as an information input portion casing and in which a charger for charging a battery included in the information input portion is provided to the receiver casing.

In an information input device according to the present invention, even an information input terminal such as a mouse, which has a specific shape, is difficult to carry, and exhibits unstable portability, can be housed in a receiver casing small enough to be carried around, and the shape of the receiver can be chosen freely so as to be, for example, substantially a rectangular parallelepiped. Since the receiver casing has such a shape as to provide stable portability, it is easily carried around and simple to handle. In particular, when the receiver casing has a size equivalent to that of a cigarette case, not only it is portable, but also, in use, it can be disposed proximate to an electronic apparatus with stability.

Conventionally, a receiver itself was small and thus the transmission/reception power was weak, and when it was disposed far from where the mouse was disposed (for example, when the receiving portion was disposed on the left side while the mouse was disposed on the right side), a sufficiently strong signal could not be transmitted.

On the other hand, in the information input device of the present invention, even when the mouse terminal is disposed far from the receiver casing, the problem can be overcome by providing a powerful antenna for the receiver casing. Further, the receiver casing can be disposed so that a signal therefrom can be satisfactorily received by a computer, and thus information is transmitted to the computer with reliability.

Since the small information input terminal such as a mouse can be housed in the receiver casing, it can be protected by the casing and does not break down even when it is somewhat roughly handled.

With the addition of devices such as a USB, hub ,a card reader , a IC recorder and a hub connect device in the receiver casing, the device can have a wide range of applications to be used widely. Further, the mouse itself can remain small-sized.

### BRIEF DESCRIPTION OF THE DRAWINGS

In the accompanying drawings:
FIG. 1 is a perspective view of an information input device according to a first embodiment of the present invention;
FIG. 2 is an explanatory view illustrating a relationship between the information input device shown in FIG. 1 and a computer according to the first embodiment of the present invention;
FIG. 3 is an explanatory view illustrating a relationship between a receiver of the information input device and an input portion casing according to the first embodiment of the present invention;
FIG. 4A is a perspective view illustrating the information input device according to a second embodiment of the present invention;
FIG. 4B is a sectional view illustrating an internal mechanism of the information input device according to the second embodiment of the present invention; and
FIG. 4C is a side view of the information input device with a lid of a casing open according to the second embodiment of the present invention.

### DETAILED DESCRIPTION OF THE PREFERRED EMBODIMENTS

An information input device according to the present invention is now described with reference to embodiments shown in the drawings.

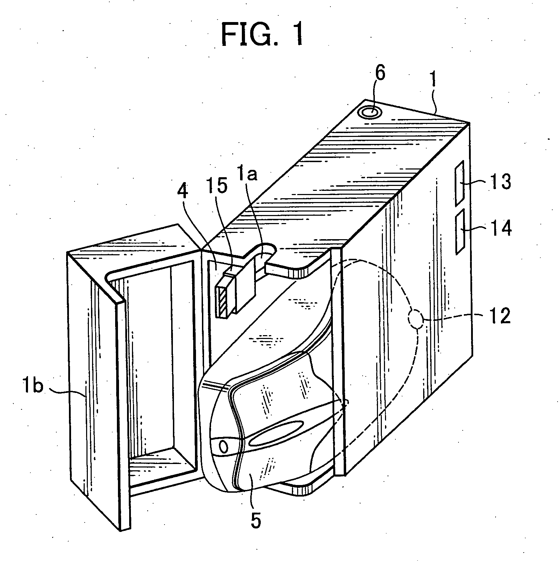

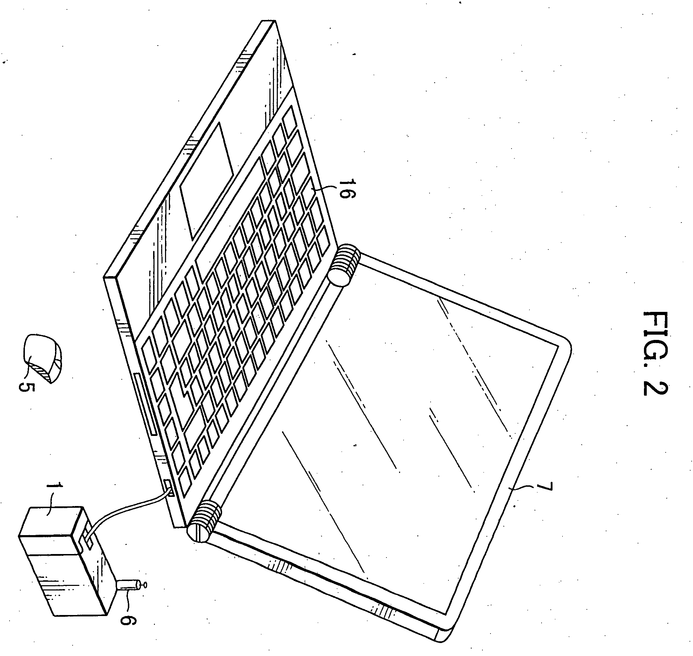

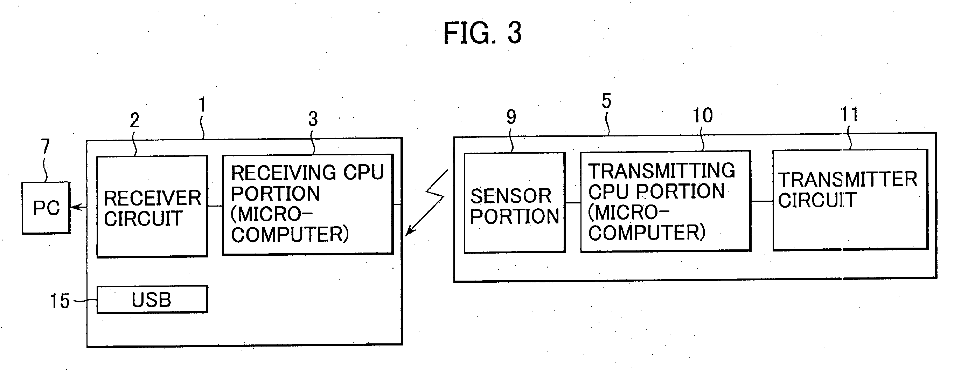

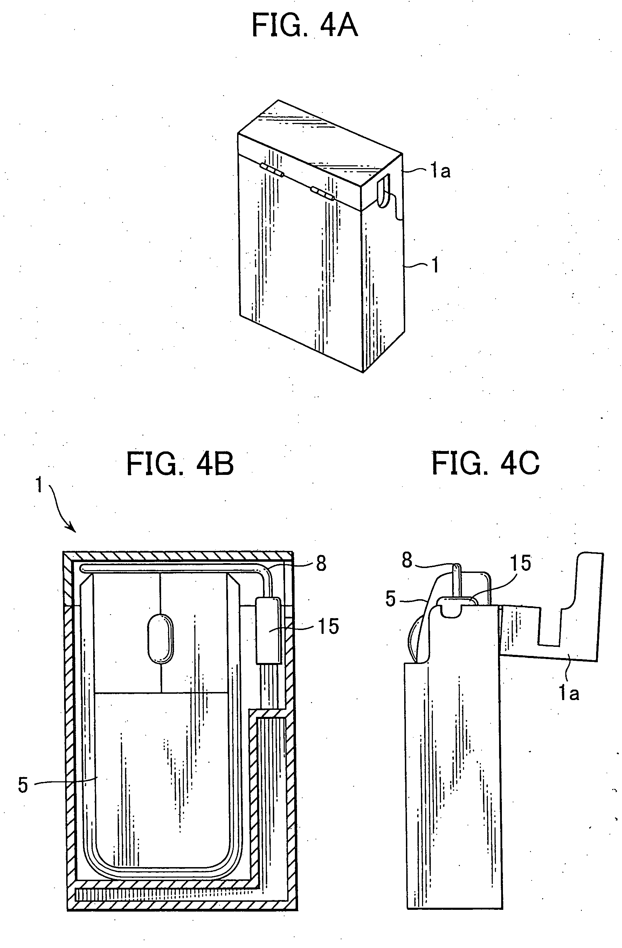

FIG. 1 is a perspective view of an information input device according to a first embodiment of the present invention. FIG. 2 is an explanatory view illustrating a relationship between the information input device shown in FIG. 1 and a computer according to the first embodiment of the present invention. FIG. 3 is an explanatory view illustrating a relationship between a receiver of the information input device and an input portion casing according to the first embodiment of the present invention. FIGS. 4A to 4C are explanatory views illustrating the information input device according to a second embodiment of the present invention.

A receiver body 1 in the shape of a casing illustrated in FIG. 1 has a receiver circuit 2 for receiving a signal from an information signal terminal and a receiving portion (CPU) 3 of a microcontroller for PS/2 communication incorporated therein. Further, the receiver body 1 includes a data processing portion for transmitting received data to an electronic apparatus. The casing is provided with a housing portion 4 for housing an information input member 5 such as a mouse. The information input member 5 is adapted to fully fit in the housing portion 4. The housing portion 4 is provided with a switch 12 for turning off the information input member 5 when the information input member 5 is inserted in the housing portion 4 and turning on the information input member 5 when the information input member 5 is taken out from the housing portion 4. Further, the receiver body 1 has a battery charger circuit incorporated therein for charging the information input member 5.

The receiver body 1 also has a receiver antenna 6 and a cable 8. The cable 8 has a USB 15 for connecting to a computer 7. The cable 8 can be housed in the receiver body 1.

Further, the receiver body 1 includes a USB connector 13 and a card reader input portion 14.

On the other hand, the information input member 5 includes a transmitting portion (CPU) 10 and a transmitter circuit 11 for transmitting coordinate information input signal and music information input signal from a sensor portion 9. The sensor portion 9 is, for example, an infrared sensor device having a printed circuit board, an optical sensor chip, an LED, and the like incorporated therein. In this embodiment, a keyboard 16 is a wireless keyboard and has a transmitter circuit incorporated therein.

In the information input device according to the present invention, a lid 1a is opened, the information input member 5 is taken out, the USB 15 is drawn out through a through hole 1b, and then the lid 1a is closed. The USB 15 is connected to the computer 7. The information input member 5 is turned on and ready to be manipulated. Coordinate position information or the like from the information input member 5 is transmitted through the transmitting CPU portion 10 and the transmitter circuit 11, received by the receiver antenna 6 of the receiver body 1, processed by the data processing portion, and transmitted to the computer 7 via the cable 8.

FIGS. 4A to 4C illustrate a second embodiment of the information input device. A casing like a cigarette case houses a USB connector, a cord, and an information input member 5 as a mouse. The lid 1a is opened, the information input member 5 is taken out and disposed at a predetermined position, a receiver body 1 is disposed proximate to a computer, a USB 15 is taken out from the inside of the casing, and the receiver body 1 is connected to the computer via the USB 15.

The receiver body 1 as the information input device structured as described above is shaped so as to be placed on a desk or the like with stability. For example, as illustrated in FIG. 4, the receiver body 1 has a size equivalent to that of a cigarette case and shaped into a rectangular parallelepiped so as to be placed with stability.

Since the information input member 5 such as a mouse can be housed in the receiver body 1, the receiver body 1 can be held in a bag or the like and carried around irrespective of the shape of the mouse. The receiver body 1 serves as a protective cover for the mouse.

Consequently, according to the present invention, the receiver can be carried around separately from the computer without the necessity of making larger the size of the computer itself in order to save space for the receiver. In particular, the receiver and the mouse can be carried around without damaging the mouse body. By miniaturizing the mouse body, the receiver body 1 can be miniaturized.

## Claims

1. An information input device, comprising:
a portable receiver body (1) comprising a receiving portion (2, 3) for receiving an information signal and a reception processing portion for transmitting received data to an electronic apparatus; and
an information input member (5) comprising transmitting portion for transmitting the information signal to the receiving portion, the information input member being detachably housed in the receiver body (1).

2. An information input device as claimed in claim 1, wherein the transmitting portion is operable to transmit the information signal only when the information input member (5) is separated from the receiver body (1).

3. An information input device as claimed in claim 1 or 2, wherein:
the information input member (5) is turned off automatically when housed in the receiver body (1); and
the information input member (5) is turned on automatically when removed from the receiver body (1).

4. An information input device as claimed in any one of claims 1 to 3, comprising:
a charger for charging a battery included in the information input member (5), the charger being provided in the receiver body (1).

5. An information input device as claimed in any one of claims 1 to 4, wherein:
the receiver body (1) is provided with an insert opening for connection to an interface device (13, 14);
the receiver body (1) comprises therein a processing circuit for the interface device (13, 14).

6. An information input device as claimed in claim 5, wherein the interface device (13, 14) is one of a USB hub (13) and a card reader (14).

7. An information input device as claimed in any one of claims 1 to 6, wherein the information input member (5) is provided by a mouse body.
